# EUROPÄISCHE PATENTSCHRIFT

(11) **EP 3 933 184 B1**
(45) Veröffentlichungstag und Bekanntmachung des Hinweises auf die Patenterteilung: **10.12.2025**
(21) Anmeldenummer: 21181609.5
(22) Anmeldetag: 24.06.2021
(51) Int. Cl.: F02D 41/00, F02D 19/06, F02D 19/08, F02D 41/30, F02M 25/00, F02M 43/00

(54) **DUAL-FUEL BRENNKRAFTMASCHINE**
DUAL FUEL COMBUSTION ENGINE
MOTEUR À COMBUSTION INTERNE BI-CARBURANT

(30) Priorität: 25.06.2020 DE 102020116710
(43) Veröffentlichungstag der Anmeldung: 05.01.2022
(73) Patentinhaber: Everllence SE, 86153 Augsburg (DE)
(72) Erfinder: Wloka, Johann, 81735 München (DE); Maier, Ludwig, 86420 Diedorf (DE); Klaua, Thomas, 86157 Augsburg (DE)

(56) Entgegenhaltungen:
- WO-A1-2017/162902
- DE-B3- 102014 016 927

## Beschreibung

Die Erfindung betrifft eine Dual-Fuel Brennkraftmaschine.

Die hier vorliegende Erfindung betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren.

Als Schiffsmotoren sind bereits Dual-Fuel Brennkraftmaschinen bekannt. Aus der Praxis bekannte Dual-Fuel Brennkraftmaschinen können in einem ersten Betriebsmodus betrieben werden, in welchem dieselben einen flüssigen Kraftstoff verbrennen, sowie in einem zweiten Betriebsmodus, in welchem dieselben einen gasförmigen Kraftstoff oder einen anderen flüssigen Kraftstoff verbrennen.

Aus der DE 10 2017 123 315 A1 ist eine Dual-Fuel Brennkraftmaschine mit einem Dual-Fuel Kraftstoffinjektor bekannt. Jeder Kraftstoff wird über eine separate Kraftstoffpumpe in Richtung auf den Dual-Fuel Kraftstoffinjektor gefördert. Ferner ist ein separates Dichtungs- und Schmierölsystem vorhanden.

DE 10 2014 016 927 B3 offenbart eine Dual-Fuel Brennkraftmaschine nach dem Oberbegriff des Anspruchs 1.

WO 2017/ 162 902 A1 offenbart weiteren Stand der Technik.

Es besteht Bedarf an einer neuartigen Dual-Fuel Brennkraftmaschine mit einfachem Aufbau.

Hiervon ausgehend liegt der vorliegenden Erfindung die Aufgabe zugrunde, ein eine neuartige Dual-Fuel Brennkraftmaschine zu schaffen.

Diese Aufgabe wird durch eine Dual-Fuel Brennkraftmaschine nach Anspruch 1 gelöst.

Die Dual-Fuel Brennkraftmaschine weist Zylinder auf, in welchen in einem ersten Betriebsmodus ein erster flüssiger Kraftstoff und in einem zweiten Betriebsmodus ein zweiter flüssiger Kraftstoff verbrennbar ist. Die Dual-Fuel Brennkraftmaschine weist ein Haupteinspritzsystem auf, welches je Zylinder mindestens einen Hauptinjektor aufweist, wobei über das Haupteinspritzsystem den Zylindern in dem ersten Betriebsmodus der erste flüssige Kraftstoff zuführbar ist, der relativ zündwillig ist, und wobei über Haupteinspritzsystem den Zylindern in dem zweiten Betriebsmodus der zweite flüssige Kraftstoff zuführbar ist, der eine relativ zündunwillig ist. Die Dual-Fuel Brennkraftmaschine weist ein Piloteinspritzsystem auf, welches je Zylinder mindestens einen Pilotinjektor aufweist, wobei über das Piloteinspritzsystem in dem zweiten Betriebsmodus den Zylindern der Brennkraftmaschine der erste flüssige Kraftstoff zur Zündung des zweiten flüssigen Kraftstoffs zuführbar ist. Das Haupteinspritzsystem und das Piloteinspritzsystem der erfindungsgemäßen Dual-Fuel Brennkraftmaschine sind derart gekoppelt, dass in dem zweiten Betriebsmodus ausgehend vom Piloteinspritzsystem der erste flüssige Kraftstoff dem jeweiligen Hauptinjektor des Haupteinspritzsystems als Arbeitsfluid und/oder als Sperrfluid zuführbar ist.

Die beiden Einspritzsysteme sind demnach miteinander gekoppelt. Dies erfolgt derart, dass in dem zweiten Betriebsmodus ausgehend vom Piloteinspritzsystem der erste flüssige Kraftstoff dem jeweiligen Hauptinjektor des Haupteinspritzsystems zuführbar ist, über welchen im zweiten Betriebsmodus der zweite flüssige Kraftstoff in die Zylinder eingebracht wird, wobei der erste flüssige Kraftstoff hierbei im jeweiligen Hauptinjektor als Arbeitsfluid und/oder als Sperrfluid dient. Ein derartiges Arbeitsfluid bzw. Sperrfluid dient der Abdichtung sowie der Betätigung von Ventilen des jeweiligen Hauptinjektors.

Bei der erfindungsgemäßen Dual-Fuel Brennkraftmaschine wird in beiden Betriebsmodi jeweils ein flüssiger Kraftstoff verbrannt. Der erste flüssige Kraftstoff für den ersten Betriebsmodus ist relativ zündwillig. Der zweite flüssige Kraftstoff für den zweiten Betriebsmodus ist relativ zündunwillig. Zum Zünden des zweiten flüssigen Kraftstoffs im zweiten Betriebsmodus dient der erste flüssige Kraftstoff. Die Dual-Fuel Brennkraftmaschine verfügt über das Haupteinspritzsystem, welches je Zylinder mindestens einen Hauptinjektor aufweist, und über das Piloteinspritzsystem, welches je Zylinder mindestens einen Pilotinjektor aufweist. Über das Haupteinspritzsystem kann den Zylindern in dem ersten Betriebsmodus der erste flüssige Kraftstoff und in dem zweiten Betriebsmodus der zweite flüssige Kraftstoff zugeführt werden. Im zweiten Betriebsmodus übernimmt der erste flüssige Kraftstoff zwei Funktionen, erstens die Funktion der Zündung des zweiten Kraftstoffs und zweitens die Funktion des Arbeitsfluids und/oder Sperrfluids im Bereich des jeweiligen Hauptinjektors. Das Haupteinspritzsystem ist mit dem Piloteinspritzsystem gekoppelt, um das Zündfluid auch als Arbeitsfluid und/oder Sperrfluid zu nutzen.

Nach der Erfindung weist das Haupteinspritzsystems eine Hauptpumpe auf, über die in dem ersten Betriebsmodus der erste flüssige Kraftstoff den Zylindern zuführbar ist, und über die in dem zweiten Betriebsmodus der zweite flüssige Kraftstoff den Zylindern zuführbar ist. Das Piloteinspritzsystem weist eine Pilotpumpe auf, über die in dem zweiten Betriebsmodus den Zylindern der erste flüssige Kraftstoff zur Zündung des zweiten flüssigen Kraftstoffs zuführbar ist. Ein erster Kraftstofftank für den ersten Kraftstoff ist mit der Hauptpumpe über eine erste Kraftstoffleitung koppelbar. Ein zweiter Kraftstofftank für den zweiten Kraftstoff ist mit der Hauptpumpe über eine zweite Kraftstoffleitung koppelbar. Ein Wechselventil dient dazu, um im ersten Betriebsmodus die Hauptpumpe über die erste Kraftstoffleitung mit dem ersten Kraftstofftank und im zweiten Betriebsmodus die Hauptpumpe über die zweite Kraftstoffleitung mit dem zweiten Kraftstofftank zu koppeln. Dies gewährleistet einen besonders einfachen Aufbau der erfindungsgemäßen Dual-Fuel Brennkraftmaschine.

Nach einer Weiterbildung der Erfindung zweigt stromaufwärts des jeweiligen Pilotinjektors eine jeweilige Abzweigleitung vom Piloteinspritzsystem ab und mündet vorzugsweise im Bereich des jeweiligen Hauptinjektors des Haupteinspritzsystems in das Haupteinspritzsystem. Im zweiten Betriebsmodus ist ein Druck in der jeweiligen vom Piloteinspritzsystem zum Haupteinspritzsystem führenden Abzweigleitung größer ist als ein Druck im Bereich des jeweiligen Hauptinjektors des Haupteinspritzsystems. Eine derartige Kopplung der beiden Einspritzsysteme über die jeweilige Abzweigleitung ist besonders bevorzugt. So kann im zweiten Betriebsmodus der erste Kraftstoff, der im Bereich des jeweiligen Hauptinjektors als Arbeitsfluid und/oder Sperrfluid dient, einfach vom Piloteinspritzsystem dem Haupteinspritzsystem zugeführt werden.

Nach einer Weiterbildung der Erfindung ist in die jeweilige Abzweigleitung ein Druckminderer integriert, um den Druck in der jeweiligen Abzweigleitung zu begrenzen. Über den Druckminderer wird der Druck in der jeweiligen Abzweigleitung begrenzt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein Schema eines Schiffsantriebssystems mit einer Dual-Fuel Brennkraftmaschine;
- Fig. 2: einen Ausschnitt aus der Dual-Fuel Brennkraftmaschine im Bereich eines Zylinders.

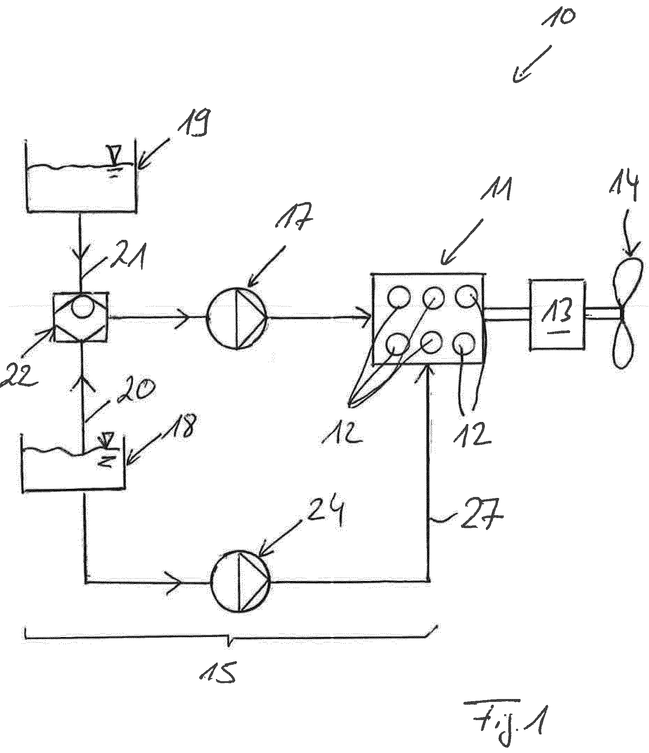

Fig. 1 zeigt stark schematisiert ein Schiffsantriebssystem 10, welches eine Dual-Fuel Brennkraftmaschine 11 mit mehreren Zylindern 12 aufweist. In den Zylindern 12 wird Kraftstoff verbrannt, und zwar in einem ersten Betriebsmodus der Dual-Fuel Brennkraftmaschine ein erster flüssiger Kraftstoff und in einem zweiten Betriebsmodus der Dual-Fuel Brennkraftmaschine ein zweiter flüssiger Kraftstoff.

Bei der Verbrennung des jeweiligen Kraftstoffs erzeugt die Dual-Fuel Brennkraftmaschine Antriebsleistung, die in Fig. 1 dazu genutzt wird, einen Generator 13 anzutreiben. Im Generator 13 wird elektrische Energie erzeugt, die dem Antrieb eines Schiffspropellers 14 dient.

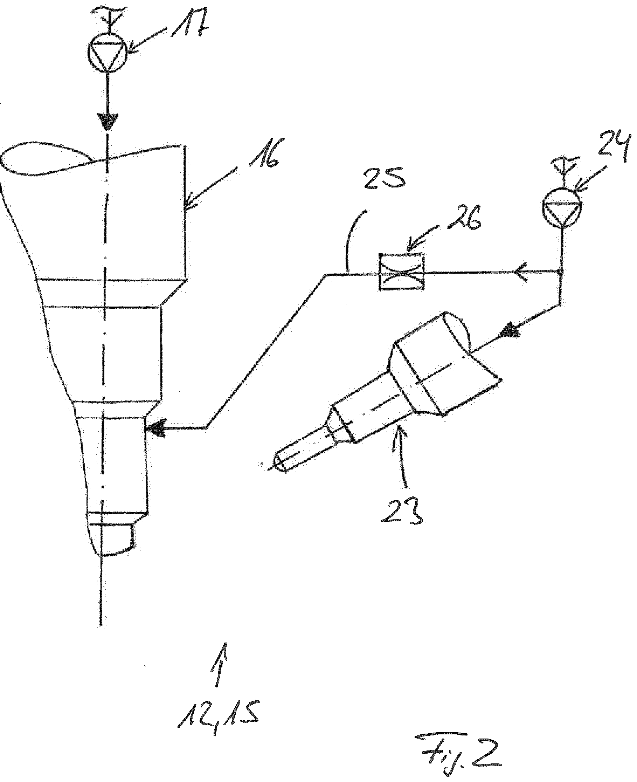

Fig. 1 zeigt weiterhin ein Kraftstoffversorgungssystem 15 der Dual-Fuel Brennkraftmaschine 11. Fig. 2 zeigt weitere Baugruppen des Kraftstoffversorgungssystems 15. Über das Kraftstoffversorgungssystem 15 kann im jeweiligen Betriebsmodus der Dual-Fuel Brennkraftmaschine 11 den Zylindern 12 derselben der jeweilige flüssige Kraftstoff zugeführt werden. Das Kraftstoffversorgungssystem 15 der Dual-Fuel Brennkraftmaschine 11 verfügt über ein Haupteinspritzsystem sowie ein Piloteinspritzsystem.

Über das Haupteinspritzsystem, welches je Zylinder 12 mindestens einen Hauptinjektor 16 (siehe Fig. 2) umfasst, kann den Zylindern 12 in dem ersten Betriebsmodus der erste flüssige Kraftstoff, der relativ zündwillig ist, und im zweiten Betriebsmodus der zweite flüssige Kraftstoff, der relativ zündunwillig ist, zugeführt werden. So zeigt Fig. 2 einen Hauptinjektor 16 eines Zylinders 12. Über diesen Hauptinjektor 16 kann in den Zylinder 12 im ersten Betriebsmodus der erste flüssige Kraftstoff und im zweiten Betriebsmodus der zweite flüssige Kraftstoff in den Zylinder 12 eingespritzt werden. Obwohl es aus Kostengründen bevorzugt ist, über denselben Hauptinjektor 16 im ersten Betriebsmodus den ersten flüssigen Kraftstoff und im zweiten Betriebsmodus den zweiten flüssigen Kraftstoff in den jeweiligen Zylinder 12 der Dual-Fuel Brennkraftmaschine einzuspritzen, ist des alternativ auch möglich, dass jeder Zylinder 12 für jeden der beiden flüssigen Kraftstoffe einen separaten Hauptinjektor aufweist. Die in Fig. 2 dargestellte Ausführung, in welcher derselbe Hauptinjektor 16 im ersten Betriebsmodus zum Einspritzen des ersten flüssigen Kraftstoffs und im zweiten Betriebsmodus zum Einspritzen des zweiten flüssigen Kraftstoffs in den jeweiligen Zylinder genutzt wird, ist jedoch bevorzugt.

Gemäß Fig. 2 ist dem jeweiligen Hauptinjektor 16 der jeweilige flüssige Kraftstoff über eine Hauptpumpe 17 zuführbar, die demnach im ersten Betriebsmodus den ersten flüssigen Kraftstoff und im zweiten Betriebsmodus den zweiten flüssigen Kraftstoff in Richtung auf den jeweiligen Hauptinjektor 16 fördert.

Fig. 1 zeigt einen ersten Kraftstoffstank 18 zur Bereithaltung des ersten flüssigen Kraftstoffs und einen zweiten Kraftstofftank 19 zur Bereithaltung des zweiten flüssigen Kraftstoffs. Der erste Kraftstofftank 18 ist über eine erste Kraftstoffleitung 20 und der zweite Kraftstofftank 19 über eine zweite Kraftstoffleitung 21 mit der Hauptpumpe 17 koppelbar, und zwar über ein Wechselventil 22.

Im ersten Betriebsmodus koppelt das Wechselventil 22 den ersten Kraftstofftank 18 bzw. die erste Kraftstoffleitung 20 mit der Hauptpumpe 17, um den Zylindern 12 der Dual-Fuel Brennkraftmaschine den ersten Kraftstoff 18 zuzuführen. In diesem ersten Betriebsmodus trennt das Wechselventil 22 den zweiten Kraftstofftank 19 von der Hauptpumpe 17 des Haupteinspritzsystems.

Im zweiten Betriebsmodus hingegen nimmt das Wechselventil 22 eine Schaltstellung ein, in welcher der zweite Kraftstofftank 19 über die zweite Kraftstoffleitung 21 an die Hauptpumpe 17 gekoppelt ist, um im zweiten Betriebsmodus den Zylindern 12 der Dual-Fuel Brennkraftmaschine 11 den zweiten Kraftstoff zuzuführen. In diesem zweiten Betriebsmodus ist dann der erste Kraftstofftank 18 von der Hauptpumpe 17 des Haupteinspritzsystems getrennt.

Wie bereits ausgeführt, ist der erste flüssige Kraftstoff relativ zündwillig und der zweite flüssige Kraftstoff relativ zündunwillig. Um den zweiten flüssigen Kraftstoff im zweiten Betriebsmodus im Bereich des jeweiligen Zylinders 12 zu zünden, verfügt die Dual-Fuel Brennkraftmaschine über das Piloteinspritzsystem, welches je Zylinder 12 mindestens einen Pilotinjektor 23 aufweist.

Über das Piloteinspritzsystem kann in dem zweiten Betriebsmodus den Zylindern 12 der Dual-Fuel Brennkraftmaschine 11 der erste flüssige Kraftstoff zur Zündung des zweiten flüssigen Kraftstoffs zugeführt werden.

So verfügt das Piloteinspritzsystem neben dem mindestens einen Pilotinjektor 23 je Zylinder 12 über eine Pilotpumpe 24, über die dann im zweiten Betriebsmodus der jeweilige Pilotinjektor 23 mit dem ersten flüssigen Kraftstoff, ausgehend vom ersten Kraftstofftank 18, versorgt werden kann. Vom ersten Kraftstofftank 18 erstreckt sich eine weitere Kraftstoffleitung 27 in Richtung auf die Zylinder 12, wobei in diese weitere Kraftstoffleitung 27 die Pilotpumpe 24 geschaltet ist.

Bei der erfindungsgemäßen Dual-Fuel Brennkraftmaschine 11 sind, wie Fig. 2 entnommen werden kann, das Haupteinspritzsystem und das Piloteinspritzsystem gekoppelt, nämlich derart, dass der erste flüssige Kraftstoff in dem zweiten Betriebsmodus ausgehend vom Piloteinspritzsystem, welches je Zylinder 12 den mindestens einen Pilotinjektor 23 und die Pilotpumpe 24 umfasst, dem jeweiligen Hauptinjektor 16 des Haupteinspritzsystems zuführbar ist, wobei der erste flüssige Kraftstoff im zweiten Betriebsmodus im Bereich des jeweiligen Hauptinjektors 16 als Arbeitsfluid und/oder als Sperrfluid dient.

So zeigt Fig. 2 eine Abzweigleitung 25, die vom Piloteinspritzsystem stromaufwärts des jeweiligen Pilotinjektors 23 abzweigt und vorzugsweise direkt zum jeweiligen Hauptinjektor 16 des Haupteinspritzsystems des jeweiligen Zylinders 12 führt und in das Haupteinspritzsystem vorzugsweise im Bereich des jeweiligen Hauptinjektors 16 mündet. Dabei zweigt die Abzweigleitung 25 in Förderrichtung des Piloteinspritzsystems gesehen stromabwärts der Pilotpumpe 24 und stromaufwärts des jeweiligen Pilotinjektors 23 vom Piloteinspritzsystem ab, um im zweiten Betriebsmodus den ersten flüssigen Kraftstoff dem jeweiligen Hauptinjektor 16 des Haupteinspritzsystems als Arbeitsfluid und/oder Sperrfluid zuzuführen.

Im zweiten Betriebsmodus herrscht dabei in der vom Piloteinspritzsystem zum Haupteinspritzsystem führenden, jeweiligen Abzweigleitung 25 ein Druck, der größer ist als der Druck im Bereich des jeweiligen Hauptinjektors 16, vorzugsweise um einen definierten Druck-Offset. Hierdurch wird im zweiten Betriebsmodus sichergestellt, dass der erste flüssige Kraftstoff dem jeweiligen Hauptinjektor 16 stets zuverlässig zugeführt werden kann.

In Fig. 2 ist in die dort gezeigte Abzweigleitung 25 ein Druckminderer 26 integriert. Dieser begrenzt den Druck in der jeweiligen Abzweigleitung 25 stromabwärts des Druckminderers 26 auf ein definiertes Niveau.

Bei dem ersten flüssigen Kraftstoff, der relativ zündwillig ist, handelt es sich vorzugsweise um einen flüssigen Kraftstoff, der vorzugsweise eine Schmierfähigkeit WSD zwischen 100 µm und 300 µm, besonders vorteilhaft zwischen 100 µm und 200 µm, aufweist. Beim zweiten flüssigen Kraftstoff, der relativ zündunwillig ist, handelt es sich vorzugsweise um einen flüssigen Kraftstoff, der vorzugsweise eine Schmierfähigkeit WSD zwischen 300 µm und 820 µm, besonders vorteilhaft zwischen 400 µm und 820 µm, aufweist. Beim ersten flüssigen Kraftstoff handelt es sich vorzugsweise um einen Dieselkraftstoff. Beim zweiten flüssigen Kraftstoff handelt es sich vorzugsweise um Ethanol oder Methanol.

Bei der erfindungsgemäßen Dual-Fuel Brennkraftmaschine 11, die in beiden Betriebsmodi jeweils einen flüssigen Kraftstoff verbrennt, dient der erste flüssige Kraftstoff im zweiten Betriebsmodus einerseits zur Zündung des zweiten flüssigen Kraftstoffs und andererseits als Arbeitsfluid und/oder Sperrfluid im Bereich des jeweiligen Hauptinjektors 16. Im zweiten Betriebsmodus nutzen demnach Hauptinjektor 16 und Pilotinjektor 23 des jeweiligen Zylinders 12 den ersten flüssigen Kraftstoff einerseits als Zündöl, welches über den jeweiligen Pilotinjektor 23 in den Zylinder 12 eingebracht wird, und andererseits als Arbeitsöl und/oder Sperröl im Bereich des Hauptinjektors 16.

Die betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren. Diese sind bei der Erfindung als Dual-Fuel Brennkraftmaschinen ausgeführt.

### Bezugszeichenliste

- 10: Schiffsantriebssystems
- 11: Dual-Fuel Brennkraftmaschine
- 12: Zylinder
- 13: Generator
- 14: Schiffspropeller
- 15: Kraftstoffversorgungssystem
- 16: Hauptinjektor
- 17: Hauptpumpe
- 18: Kraftstofftank
- 19: Kraftstofftank
- 20: Kraftstoffleitung
- 21: Kraftstoffleitung
- 22: Wechselventil
- 23: Pilotinjektor
- 24: Pilotpumpe
- 25: Abzweigleitung
- 26: Druckminderer
- 27: Kraftstoffleitung

## Patentansprüche

1. Dual-Fuel Brennkraftmaschine (11),
mit Zylindern (12), in welchen in einem ersten Betriebsmodus ein erster flüssiger Kraftstoff und in einem zweiten Betriebsmodus ein zweiter flüssiger Kraftstoff verbrennbar ist,
mit einem je Zylinder (12) mindestens einen Hauptinjektor (16) aufweisenden Haupteinspritzsystem, über welches den Zylindern (12) in dem ersten Betriebsmodus der erste flüssige Kraftstoff zuführbar ist, der relativ zündwillig ist, und über welches den Zylindern (12) in dem zweiten Betriebsmodus der zweite flüssige Kraftstoff zuführbar ist, der eine relativ zündunwillig ist,
mit einem je Zylinder (12) mindestens einen Pilotinjektor (23) aufweisenden Piloteinspritzsystem, über welches in dem zweiten Betriebsmodus den Zylindern (12) der Brennkraftmaschine der erste flüssige Kraftstoff zur Zündung des zweiten flüssigen Kraftstoffs zuführbar ist,
wobei das Haupteinspritzsystem und das Piloteinspritzsystem derart gekoppelt sind, dass in dem zweiten Betriebsmodus ausgehend vom Piloteinspritzsystem der erste flüssige Kraftstoff dem jeweiligen Hauptinjektor (16) des Haupteinspritzsystems als Arbeitsfluid und/oder als Sperrfluid zuführbar ist,
das Haupteinspritzsystem eine Hauptpumpe (17) aufweist, über die in dem ersten Betriebsmodus der erste flüssige Kraftstoff den Zylindern (12) zuführbar ist, und über die in dem zweiten Betriebsmodus der zweite flüssige Kraftstoff den Zylindern (12) zuführbar ist,
das Piloteinspritzsystem eine Pilotpumpe (24) aufweist, über die in dem zweiten Betriebsmodus den Zylindern (12) der erste flüssige Kraftstoff zur Zündung des zweiten flüssigen Kraftstoffs zuführbar ist,
**gekennzeichnet durch**
einen ersten Kraftstofftank (18) für den ersten Kraftstoff, der mit der Hauptpumpe (17) über eine erste Kraftstoffleitung (20) koppelbar ist,
einen zweiten Kraftstofftank (19) für den zweiten Kraftstoff, der mit der Hauptpumpe (17) über eine zweite Kraftstoffleitung (21) koppelbar ist,
ein Wechselventil (22), um im ersten Betriebsmodus die Hauptpumpe (17) über die erste Kraftstoffleitung (20) mit dem ersten Kraftstofftank (18) und im zweiten Betriebsmodus die Hauptpumpe (17) über die zweite Kraftstoffleitung (21) mit dem zweiten Kraftstofftank (19) zu koppeln.

2. Dual-Fuel Brennkraftmaschine nach Anspruch 1,
wobei stromaufwärts des jeweiligen Pilotinjektors (23) eine jeweilige Abzweigleitung (25) vom Piloteinspritzsystem abzweigt, über die im zweiten Betriebsmodus der erste flüssige Kraftstoff dem jeweiligen Hauptinjektor (16) als Arbeitsfluid und/oder als Sperrfluid zuführbar ist.

3. Dual-Fuel Brennkraftmaschine nach Anspruch 2,
wobei die jeweilige Abzweigleitung (25) im Bereich des jeweiligen Hauptinjektors (16) in das Haupteinspritzsystem mündet.

4. Dual-Fuel Brennkraftmaschine nach Anspruch 2 oder 3,
wobei in die jeweilige Abzweigleitung (25) ein Druckminderer (26) integriert ist, um den Druck in der jeweiligen Abzweigleitung (25) zu begrenzen.

5. Dual-Fuel Brennkraftmaschine nach einem der Ansprüche 2 bis 4,
wobei im zweiten Betriebsmodus ein Druck in der jeweiligen vom Piloteinspritzsystem zum Haupteinspritzsystem führenden Abzweigleitung (25) größer ist als ein Druck im Bereich des jeweiligen Hauptinjektors (16) des Haupteinspritzsystems.

6. Dual-Fuel Brennkraftmaschine nach Anspruch 2,
wobei die jeweilige Abzweigleitung (25) stromaufwärts des jeweiligen Pilotinjektors (23) und stromabwärts der Pilotpumpe (24) vom Piloteinspritzsystem abzweigt.

7. Dual-Fuel Brennkraftmaschine nach einem der Ansprüche 1 bis 6,
wobei der erste flüssige Kraftstoff eine Schmierfähigkeit WSD zwischen 100 µm und 300 µm, vorzugsweise zwischen 100 µm und 200 µm, aufweist,
wobei der zweite flüssige Kraftstoff eine Schmierfähigkeit WSD zwischen 300 µm und 820 µm, vorzugsweise zwischen 400 µm und 820 µm, aufweist.

8. Dual-Fuel Brennkraftmaschine nach einem der Ansprüche 1 bis 7,
wobei der erste flüssige Kraftstoff ein Dieselkraftstoff ist,
wobei der zweite flüssige Kraftstoff Ethanol oder Methanol ist.

## Claims

1. A dual-fuel internal combustion engine (11),
having cylinders (12), in which in a first operating mode a first liquid fuel and in a second operating mode a second liquid fuel is combustible,
having a main injection system comprising at least one main injector (16) for each cylinder (12), via which the cylinders (12) can be supplied with the first liquid fuel, which is relatively ignitable, in the first operating mode and via which the cylinders (12) can be supplied with the second liquid fuel which is relatively low-ignitable, in the second operating mode,
having a pilot injection system comprising at least one pilot injector (23) for each cylinder (12), via which in the second operating mode the cylinders (12) of the internal combustion engine can be supplied with the first liquid fuel for igniting the second liquid fuel,
wherein the main injection system and the pilot injection system are coupled in such a manner that in the second operating mode, emanating from the pilot injection system, the first liquid fuel can be supplied to the respective main injector (16) of the main injection system as working fluid and/or as barrier fluid,
the main injection system comprises a main pump (17), via which in the first operating mode the first liquid fuel can be supplied to the cylinders (12), and via which in the second operating mode the second liquid fuel can be supplied to the cylinders (12),
the pilot injection system comprises a pilot pump (24), via which in the second operating mode the cylinders (12) can be supplied with the first liquid fuel for igniting the second liquid fuel,
**characterised**
**by** a first fuel tank (18) for the first fuel, which can be coupled to the main pump (17) via a first fuel line (20),
by a second fuel tank (19) for the second fuel, which can be coupled to the main pump (17) via a second fuel line (21),
a shuttle valve (22) in order to couple in the first operating mode the main pump (17) via the first fuel line (20) to the first fuel tank (18) and in the second operating mode the main pump (17) via the second fuel line (21) to the second fuel tank (19).

2. The dual-fuel internal combustion engine according to Claim 1,
wherein upstream of the respective pilot injector (23) a respective branch line (25) branches off the pilot injection system, via which in the second operating mode the first liquid fuel can be supplied as working fluid and/or as barrier fluid to the respective main injector (16).

3. The dual-fuel internal combustion engine according to Claim 2,
wherein the respective branch line (25), in the region of the respective main injector (16), leads into the main injection system.

4. The dual-fuel internal combustion engine according to Claim 2 or 3,
wherein in the respective branch line (25) a pressure reducer (26) is integrated in order to limit the pressure in the respective branch line (25).

5. The dual-fuel internal combustion engine according to any one of the Claims 2 to 4,
wherein in the second operating mode a pressure in the respective branch line (25) leading from the pilot injection system to the main injection system is greater than a pressure in the region of the respective main injector (16) of the main injection system.

6. The dual-fuel internal combustion engine according to Claim 2,
wherein the respective branch line (25) branches off the pilot injection system upstream of the respective pilot injector (23) and downstream of the pilot pump (24).

7. The dual-fuel internal combustion engine according to any one of the Claims 1 to 6,
wherein the first liquid fuel has a lubricity WSD between 100 µm and 300 µm, preferentially between 100 µm and 200 µm,
wherein the second liquid fuel has a lubricity WSD between 300 µm and 820 µm, preferentially between 400 µm and 820 µm.

8. The dual-fuel internal combustion engine according to any one of the Claims 1 to 7,
wherein the first liquid fuel is a diesel fuel,
wherein the second liquid fuel is ethanol or methanol.

## Revendications

1. Moteur à combustion interne bicarburant (11),
comportant des cylindres (12) dans lesquels un premier carburant liquide est combustible dans un premier mode de fonctionnement et un deuxième carburant liquide est combustible dans un deuxième mode de fonctionnement,
comportant un système d'injection principal comportant au moins un injecteur principal (16) par cylindre (12), permettant d'alimenter les cylindres (12) dans le premier mode de fonctionnement en premier carburant liquide, qui est relativement facilement inflammable, et permettant d'alimenter les cylindres (12) dans le deuxième mode de fonctionnement en deuxième carburant liquide, qui est relativement ininflammable,
comportant un système d'injection pilote comportant au moins un injecteur pilote (23) par cylindre (12), permettant d'alimenter les cylindres (12) du moteur à combustion interne dans le deuxième mode de fonctionnement, pour l'allumage du deuxième carburant liquide,
dans lequel le système d'injection principal et le système d'injection pilote sont couplés de telle sorte que, dans le deuxième mode de fonctionnement, le premier carburant liquide puisse être alimenté depuis le système d'injection pilote vers l'injecteur principal correspondant (16) du système d'injection principal comme fluide de travail et/ou comme fluide de barrage,
le système d'injection principal comporte une pompe principale (17), permettant d'alimenter les cylindres (12) dans le premier mode de fonctionnement avec le premier carburant liquide et permettant d'alimenter les cylindres (12) dans le deuxième mode de fonctionnement avec le deuxième carburant liquide,
le système d'injection pilote comporte une pompe pilote (24), permettant d'alimenter les cylindres (12) dans le deuxième mode de fonctionnement en carburant liquide pour l'allumage du deuxième carburant liquide,
**caractérisé par** :
un premier réservoir de carburant (18) pour le premier carburant, pouvant être raccordé à la pompe principale (17) via une première conduite de carburant (20),
un deuxième réservoir de carburant (19) pour le deuxième carburant, pouvant être raccordé à la pompe principale (17) via une deuxième conduite de carburant (21),
un clapet de transfert (22), pour raccorder la pompe principale (17) au premier réservoir de carburant (18) via la première conduite de carburant (20) dans le premier mode de fonctionnement et la pompe principale (17) au deuxième réservoir de carburant (19) via la deuxième conduite de carburant (21) dans le deuxième mode de fonctionnement.

2. Moteur à combustion interne bicarburant selon la revendication 1,
dans lequel, en amont de l'injecteur pilote (23), une conduite de dérivation (25) respective bifurque du système d'injection pilote, par laquelle, dans le deuxième mode de fonctionnement, le premier carburant liquide peut être acheminé vers l'injecteur principal (16) respectif comme fluide de travail et/ou comme fluide de barrage.

3. Moteur à combustion interne bicarburant selon la revendication 2,
dans lequel la conduite de dérivation (25) débouche dans le système d'injection principal au niveau de l'injecteur principal (16) concerné.

4. Moteur à combustion interne bicarburant selon la revendication 2 ou 3,
dans lequel un réducteur de pression (26) est intégré à la conduite de dérivation (25), pour limiter la pression dans la conduite de dérivation (25) respective.

5. Moteur à combustion interne bicarburant selon une des revendications 2 à 4,
dans lequel, dans le deuxième mode de fonctionnement, une pression dans la conduite de dérivation (25) reliant le système d'injection pilote au système d'injection principal est supérieure à une pression au niveau de l'injecteur principal (16) du système d'injection principal.

6. Moteur à combustion interne bicarburant selon la revendication 2,
dans lequel la conduite de dérivation (25) bifurque du système d'injection pilote en amont de l'injecteur pilote (23) et en aval de la pompe pilote (24).

7. Moteur à combustion interne bicarburant selon une des revendications 1 à 6,
dans lequel le premier carburant liquide présente un pouvoir lubrifiant WSD compris entre 100 µm et 300 µm, de préférence entre 100 µm et 200 µm,
dans lequel le deuxième carburant liquide présente un pouvoir lubrifiant WSD compris entre 300 µm et 820 µm, de préférence entre 400 µm et 820 µm.

8. Moteur à combustion interne bicarburant selon une des revendications 1 à 7,
dans lequel le premier carburant liquide est un carburant diesel et
le deuxième carburant liquide est de l'éthanol ou du méthanol.
